# EUROPEAN PATENT SPECIFICATION

(11) **EP 2 938 871 B1**
(45) Date of publication and mention of the grant of the patent: **21.11.2018**
(21) Application number: 13870398.8
(22) Date of filing: 20.12.2013
(51) Int. Cl.: F04D 29/02, F04D 29/60, F02K 1/04

(54) **THERMALLY TUNABLE SYSTEMS**
THERMISCH ABSTIMMBARE SYSTEME
SYSTÈMES THERMIQUEMENT ACCORDABLES

(30) Priority: 31.12.2012 US 201261747733 P
(43) Date of publication of application: 04.11.2015
(73) Proprietor: Rolls-Royce Corporation, Indianapolis, Indiana 46225 (US); Rolls-Royce North American Technologies, Inc., Indianapolis, IN 46241 (US)
(72) Inventor: PETERS, Joshua M., Indianapolis, Indiana 46268 (US); MUSKAT, James C., Mooresville, Indiana 46158 (US)
(74) Representative: Dauncey, Mark Peter
(86) International application number: PCT/US2013/077184
(87) International publication number: WO 2014/143334

(56) References cited:
- EP-A1- 0 018 252
- FR-A1- 2 958 262
- GB-A- 722 740
- US-A- 2 674 844
- US-A1- 2007 280 822

## Description

### FIELD OF THE DISCLOSURE

The present disclosure relates to thermally tunable systems. More particularly, in some embodiments, the present disclosure relates to thermally tunable fastener systems.

### BACKGROUND

Fastener systems that exhibit a desirable thermal response remain an area of interest. Some existing systems have various shortcomings, drawbacks, and disadvantages relative to certain applications. Accordingly, there remains a need for further contributions in this area of technology.

US2007 280822 discloses a ceramic composite component and a fastener for attaching the ceramic composite component to a structural component. EP0018252, FR2958262, US2674844, and GB722740 disclose coupling assemblies for use in turbine engines.

### SUMMARY

The present disclosure may comprise one or more of the following features and combinations thereof.

The present disclosure is a unique gas turbine system. Another aspect is a unique fastener system. Another aspect is a unique gas turbine engine. Other aspects include apparatuses, systems, devices, hardware, methods, and combinations for gas turbine engines, fastener systems and other systems. Further forms, features, aspects, benefits, and advantages of the present application will become apparent from the description and figures provided herewith.

According to the present invention, a gas turbine system for positioning a first structure relative to a second structure includes a core shaft, an inner shell, and an outer shell. The core shaft has a first coefficient of thermal expansion, a first abutment feature, and a first interface feature. The first abutment feature is configured for transmitting loads and/or motion between the core shaft and the first structure.

The inner shell has a second coefficient of thermal expansion that is different than the first coefficient of thermal expansion, a second interface feature, and a third interface feature. The first interface feature and the second interface feature are configured for engagement with each other and are configured to transmit an axial load between the core shaft and the inner shell.

The outer shell has a third coefficient of thermal expansion that is different than the second coefficient of thermal expansion, a second abutment feature, and a fourth interface feature. The second abutment feature is configured for transmitting loads and/or motion between the outer shell to the second structure. The fourth interface feature and the third interface feature are configured for engagement with each other and are configured to transmit the axial load between the inner shell and the outer shell.

In some embodiments, the first, second, and third coefficients of thermal expansion may be selected to increase an axial distance between the first abutment feature and the second abutment feature with increasing temperature. In some embodiments, the first, second, and third coefficients of thermal expansion may be selected to maintain an axial distance between the first abutment feature and the second abutment feature with increasing temperature.

In some embodiments, the first, second, and third coefficients of thermal expansion may be selected to decrease an axial distance between the first abutment feature and the second abutment feature with increasing temperature. In some embodiments, the first, second, and third coefficients of thermal expansion may be selected to achieve a desired axial distance between the first abutment feature and the second abutment feature at a desired operating temperature.

In some embodiments, the core shaft and the outer shell may be configured for sliding relative motion as with respect to each other along a longitudinal axis of the system. In some embodiments, the core shaft may not be hollow.

In some embodiments, the inner shell may be disposed within the outer shell. The core shaft may be disposed within the inner shell.

In some embodiments, in an installed condition, the first abutment feature may be coupled to the first structure and the second abutment feature may be coupled to the second structure. In the installed condition, the outer shell and the core shaft may be loaded in tension and the inner shell may be loaded in compression.

In some embodiments, in an installed condition, the first abutment feature may be attached to the first structure and the second abutment feature may be attached to the second structure. In the installed condition and at an operating temperature, the core shaft and the outer shell may be loaded in tension. In the installed condition at the operating temperature, the inner shell may be loaded in compression.

These and other features of the present disclosure will become more apparent from the following description of the illustrative embodiments.

### BRIEF DESCRIPTION OF THE DRAWINGS

The description herein makes reference to the accompanying drawings wherein like reference numerals refer to like parts throughout the several views, and wherein:
FIG. 1 schematically depicts some aspects of an example of a gas turbine engine in accordance with an embodiment of the present disclosure; and
FIG. 2 illustrates some aspects of an example of a tunable fastener system in accordance with an embodiment of the present disclosure.

### DETAILED DESCRIPTION

For purposes of promoting an understanding of the principles of the disclosure, reference will now be made to the embodiments illustrated in the drawings, and specific language will be used to describe the same. It will nonetheless be understood that no limitation of the scope of the disclosure is intended by the illustration and description of certain embodiments of the disclosure. In addition, any alterations and/or modifications of the illustrated and/or described embodiment(s) are contemplated as being within the scope of the present disclosure. Further, any other applications of the principles of the disclosure, as illustrated and/or described herein, as would normally occur to one skilled in the art to which the disclosure pertains, are contemplated as being within the scope of the present disclosure.

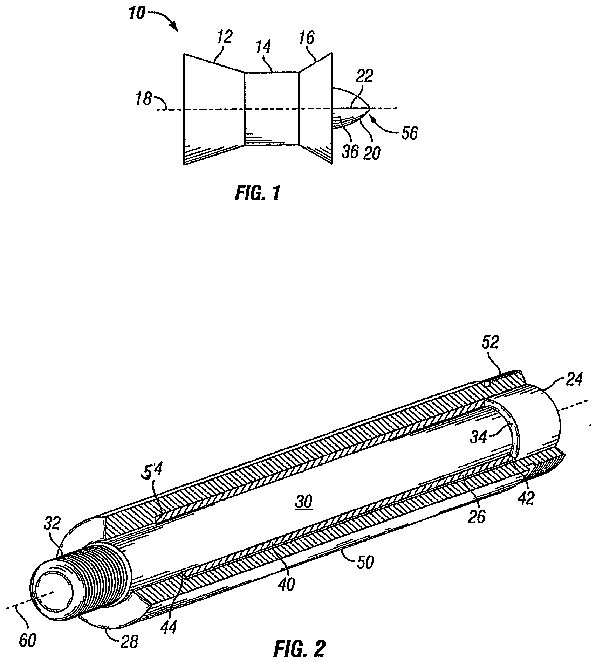

Referring to the drawings, and in particular FIG. 1, some aspects of an example of an engine 10 in accordance with an embodiment of the present disclosure are schematically depicted. In one form, engine 10 is a gas turbine engine. Engine 10 includes a compressor system 12, a combustion system 14 in fluid communication with compressor system 12, and a turbine system 16 in fluid communication with combustion system 14. In one form, compressor system 12, combustion system 14 and turbine system 16 are disposed about an engine centerline 18, e.g., the axis of rotation of compressor system 12 and turbine system 16. In other embodiments, other arrangements may be employed. In various embodiments, engine 10 may or may not have a compressor system and/or a turbine system, or may have additional turbomachinery components in addition to a compressor system and/or a turbine system. In some embodiments, engine 10 may be a direct propulsion engine that produces thrust directly from combustion system 14. In other embodiments, combustion system 14 may form a gas generator for a gas turbine propulsion system, or may be employed in a gas turbine engine topping cycle. In still other embodiments, engine 10 may be one or more of other types of gas turbine engines, hybrid engines, and/or combined cycle engines.

Attached to turbine system 16 is a tailcone 20. In one form, tailcone 20 is secured to turbine system 16 via a thermally tunable fastener (tiebolt) system 22. In other embodiments, a plurality of fastener systems 22 may be employed to secure tailcone 20 to turbine system 16. In one form, tailcone 20 is a rotating monolithic ceramic tailcone. In other embodiments, tailcone 20 may be stationary. In various embodiments, tailcone 20 may be formed from any metallic, intermetallic, ceramic, or composite material. Tailcone 20 is expected to experience thermal growth as its temperature increases from ambient temperature, e.g., from sea level static standard day conditions, to some predetermined engine 10 design point or other operating point temperature. The thermal growth of typical fasteners is typically about twice the thermal growth of tailcone 20, e.g., depending upon the materials used in construction of the fastener and of tailcone 20, and the temperature differential(s) experienced during operation relative to ambient temperature. Hence, with the use of conventional fasteners, there may be a tendency of tailcone 20 to become loose during operation, owing to the relative thermal expansion between tailcone 20 and the conventional fasteners.

Referring now to FIG. 2, in conjunction with FIG. 1, some aspects of an example of fastener system 22 in accordance with an embodiment of the present disclosure is depicted. Fastener system 22 is a thermally tunable fastener system, e.g., tunable by selection of materials used to form fastener system 22. Fastener system 22 includes a member 24, a member 26, and a member 28. In one form, member 24 is an elongated cylindrical core shaft, member 26 is an elongated cylindrical inner shell, and member 28 is an elongated cylindrical outer shell. In other embodiments, one or more of members 24, 26 and 28 may take other forms, e.g., shapes other than cylindrical and/or elongate. In one form, member 24 is solid, e.g., not hollow. In other embodiments, member 24 may include one or more passages extending therethrough, and/or may be hollow, e.g., to permit the passage of one or more fluids, e.g., cooling air, to pass therethrough.

Member 24 includes a body 30, an attachment feature 32, and an interface feature 34. Attachment feature 32 is configured to attach member 24 to an attachment location 36 on turbine system 16, e.g., a final turbine rotor stage (not shown). In one form, attachment feature 32 is an externally threaded portion of member 24. In other embodiments, one or more other attachment mechanism types may be employed in addition to or in place of threads. In one form, interface feature 34 is a shoulder formed into the aft end of member 24, and is configured to interface with a corresponding interface feature on member 26. In other embodiments, interface feature 34 may take other geometric forms suitable for interfacing with a corresponding interface feature on member 26 and for transmitting axial loads between member 24 and member 26. The location of interface feature 34 on member 24 may vary with the needs of the particular application. Member 24, in particular, body 30, has a coefficient of thermal expansion α1.

Member 26 includes a body 40, an interface feature 42, and an interface feature 44. Interface feature 42 and interface feature 34 are configured for engagement with each other, and are configured to transmit axial loads between member 24 and member 26. In one form, interface features 42 and 44 are in the form of end walls of member 26. In other embodiments, one or both of interface features 42 and 44 may take other forms in addition to or in place of end walls of member 26, and may be located in accordance with the needs of the particular application. Member 26, in particular body 40, has a coefficient of thermal expansion α2 that is higher (greater) than coefficient of thermal expansion α1 of member 24.

Member 28 includes a body 50, an attachment feature 52, and an interface feature 54. Attachment feature 52 is configured to attach member 28 to an attachment location 56 on tailcone 20. In one form, attachment feature 52 is an externally threaded portion of member 28. In other embodiments, one or more other attachment mechanism types may be employed in addition to or in place of threads. System 22 is configured to secure attachment location 36 to attachment location 56, e.g., to secure tailcone 20 to turbine system 16. In one form, interface feature 54 is an internal shoulder of member 28. In other embodiments, interface feature 54 may take one or more other forms in addition to or in place of an internal shoulder of member 28, and may be located in accordance with the needs of the particular application. Interface feature 54 and interface feature 44 are configured for engagement with each other, and are configured to transmit axial loads between member 26 and member 28. Member 28, in particular body 50, has a coefficient of thermal expansion α3 that is lower than coefficient of thermal expansion α2 of member 26. In other embodiments, the coefficient of expansion, α3, may be greater than, including substantially greater than the coefficient of thermal expansion α2 of member 26.

An axis 60 extends between attachment feature 32 and attachment feature 52. In one form, axis 60 is a longitudinal axis of fastener system 22. In one form, members 24, 26 and 28, and in particular, bodies 30, 40 and 50 are bodies of revolution centered on axis 60, e.g., cylindrical shafts. In other embodiments, members 24, 26 and 28, bodies 30, 40 and 50 may not be bodies of revolution, and/or may not be centered on axis 60.

In one form, member 24 is disposed proximate to member 26; and member 26 is disposed proximate to member 28. In a particular form, body 30 is nested within body 40; and body 40 is nested within body 50. In some embodiments, one or more anti-rotation schemes may be employed to limit the rotation of one or members 24, 26 and 28 relative to one or more others of members 24, 26 and 28. In other embodiments, members 24, 26 and 28, and bodies 30, 40 and 50 may take other forms. For example, in some embodiments, one or more of members 24, 26, and 28 and/or one or more of bodies 30, 40, and 50 may be in the form of metallic sheets or plates, e.g., that are sandwiched together.

In one form, members 24, 26, and 28 are configured for relative sliding motion as with respect to each other along axis 60, e.g., as the temperature of system 22 changes, thereby changing the lengths of members 24, 26, and 28 relative to each other. In particular, members 24 and 28 are configured for relative sliding motion as with respect to each other along axis 60, e.g., as the temperature of system 22 changes, which has a greater effect on member 26 owing to its higher coefficient of thermal expansion than those of members 24 and 28, thus imparting relative motion between members 24 and 28 with changes in temperature of system 22.

When system 22 is in the installed condition, attachment feature 32 is attached to attachment location 36, e.g., on turbine system 16; and attachment feature 52 is attached to attachment location 56, e.g., on tailcone 20. In one form, when system 22 is installed, members 24 and 28 are loaded in tension, whereas member 26 is loaded in compression. In one form, as the temperature of system 22 increases, e.g., to an operating temperature consistent with engine 10 operation, the coefficient of thermal expansion α2 of member 26, being higher than that of members 24 and 28, yields higher thermal growth in member 26 than in members 24 and 28, and loads member 26 in compression and members 24 and 28 in tension. Although thermal growth of members 24 and 28 tends to increase the overall dimension of system 22, e.g., as measured between attachment features 32 and 52, the thermal growth of member 26 tends toward decreasing the overall dimension of system 22, that is, tends to drive attachment features 32 and 52 closer together. System 22 may thus be tuned, by virtue of material selection to yield desired coefficients of expansion α1, α2, and α3, and by the length of members 24, 26, and 28 as between their respective interface features 34, 42, 44, and 54 to increase, decrease, or maintain a desired axial distance between attachment features 32 and 52 with increasing temperature and at a desired operating temperature. Hence, system 22 may be tuned, e.g., to match the thermal growth of tailcone 20 to reduce thermal loading upon tailcone 20 during the operation of engine 10, or to achieve some desired loading condition in system 22 and tailcone 20 during operation of engine 10, e.g., at a desired operating temperature.

In other embodiments, system 22 may or may not be a fastener, and may be configured to, for example, position or reposition
or more components and/or portions of components. For example, one or both of attachment features 32 and 52 may be configured as abutment features configured for transmitting load and/or motion between the core shaft and a first structure, and between the outer shaft and a second structure. In one form, such embodiments may be configured to position the first structure and the second structure relative to each other, e.g., by translating and/or rotating one or both of the first structure and the second structure, in response to a change in temperature of system 22.

In some embodiments, the coefficients of thermal expansion, α1, α2, and/or α3 may be selected so that system 22 expands in length with increasing temperature faster than other metals, slower than other metals, or faster or slower than other engineering materials, e.g., composite materials. The relative positioning of the first structure and the second structure in response to the change in temperature may provide the basis of operation of one or more systems or devices. For example, in one embodiment, one or more systems 22 may be coupled to a valve system, and may operate a conventional valve or a fluidic valve to increase or decrease flow and/or alter flow direction by displacing one or more components of the valve in response to a change in temperature using system(s) 22. In various embodiments, system 22 may be configured to shift or position surfaces or other features axially and/or radially in response to changes in temperature of system 22. Some embodiments may include shifting the axial position of and/or radially deflect an aircraft and/or engine inlet component or a tailcone or exhaust system component, e.g., an exhaust mixer, in order to vary the flowpath area or throat area.

In some embodiments, system 22 may be arranged in a stacked configuration, e.g., using a plurality of one or more of members 24, 26, and 28 arranged in series, in order to increase the output of system 22, e.g., the displacement. In some embodiments, one or more systems 22 may be configured to displace an inner or outer band within the engine, rotate or shift one or more airfoils or rows of airfoils, and/or may be configured to drive a wedge, a lever, or any other mechanism to position, fasten, bend, or otherwise affect in a direction the same as or other than the mechanism's direction of action. In some embodiments, the actuating power of system 22 or modifications thereof could axially deflect the end of a specially-designed tailcone, e.g., a metallic tailcone, to cause it to expand radially, closing a throat for example.

Embodiments of the present disclosure include a system for securing a first attachment location to a second attachment location. The system includes a first member, a second member, and a third member. The first member has a first coefficient of thermal expansion, a first attachment feature, and a first interface feature. The first attachment feature is configured for attaching the first member to the first attachment location. The second member has a second coefficient of thermal expansion that is higher than the first coefficient of thermal expansion. The second member has a second interface feature and a third interface feature. The first interface feature and the second interface feature are configured for engagement with each other and are configured to transmit an axial load between the first member and the second member. The third member has a third coefficient of thermal expansion that is lower than the second coefficient of thermal expansion, a second attachment feature, and a fourth interface feature. The second attachment feature is configured to attach the third member to the second attachment location. The fourth interface feature and the third interface feature are configured for engagement with each other, and are configured to transmit the axial load between the second member and the third member.

In a refinement, in an installed condition, the first attachment feature is attached to the first attachment location. The second attachment feature is attached to the second attachment location. In the installed condition, the first member and the third member are loaded in tension and the second member is loaded in compression.

In another refinement, in an installed condition, the first attachment feature is attached to the first attachment location. The second attachment feature is attached to the second attachment location. In the installed condition and at an operating temperature, the first member and the third member are loaded in tension. In the installed condition at the operating temperature, the second member is loaded in compression.

In yet another refinement, the first member, the second member, and the third member are arranged in a relationship wherein the second member is disposed proximate the first member and the third member is disposed proximate the second member. In still another refinement, the first member includes a first member body, the second member includes a second member body, and the third member includes a third member body.

In yet still another refinement, at least one of the first member body, the second member body, and the third member body are cylindrical shafts. In a further refinement, the first member body is nested within the second member body and the second member body is nested within the third member body.

In a yet further refinement, the first member and the third member are configured for relative sliding motion as with respect to each other along a longitudinal axis of the system. In a still further refinement, the first member and the third member are configured for sliding relative motion as with respect to each other along an axis extending between the first attachment feature and the second attachment feature.

Embodiments of the present disclosure include a system for positioning a first structure relative to a second structure, comprising: a core shaft, an inner shell, and an outer shell. The core shaft has a first coefficient of thermal expansion, a first abutment feature, and a first interface feature. The first abutment feature is configured for transmitting load between the core shaft and the first structure.

The inner shell has a second coefficient of thermal expansion that is different than the first coefficient of thermal expansion, a second interface feature, and a third interface feature. The first interface feature and the second interface feature are configured for engagement with each other and are configured to transmit an axial load between the core shaft and the inner shell.

The outer shell has a third coefficient of thermal expansion that is different than the second coefficient of thermal expansion, a second abutment feature, and a fourth interface feature. The second abutment feature is configured for transmitting load between the outer shell to the second structure. The fourth interface feature and the second interface feature are configured for engagement with each other and are configured to transmit the axial load between the inner shell and the outer shell.

In a refinement, the first, second, and third coefficients of thermal expansion are selected to increase an axial distance between the first abutment feature and the second abutment feature with increasing temperature. In another refinement, the first, second, and third coefficients of thermal expansion are selected to maintain an axial distance between the first abutment feature and the second abutment feature with increasing temperature.

In yet another refinement, the first, second, and third coefficients of thermal expansion are selected to decrease an axial distance between the first abutment feature and the second abutment feature with increasing temperature. In still another refinement, the first, second, and third coefficients of thermal expansion are selected to achieve a desired axial distance between the first abutment feature and the second abutment feature at a desired operating temperature.

In a yet still another refinement, the core shaft and the outer shell are configured for sliding relative motion as with respect to each other along a longitudinal axis of the system. In a further refinement, the core shaft is not hollow.

In a yet further refinement, the inner shell is disposed within the outer shell. The core shaft is disposed within the inner shell.

In a still further refinement, in an installed condition, the first abutment feature is couple to the first structure and the second abutment feature is coupled to the second structure. In the installed condition, the outer shell and the core shaft are loaded in tension and the inner shell is loaded in compression.

In a yet still further refinement, in an installed condition, the first abutment feature is attached to the first structure and the second abutment feature is attached to the second structure. In the installed condition and at an operating temperature, the core shaft and the outer shell are loaded in tension. In the installed condition at the operating temperature, the inner shell is loaded in compression.

Embodiments of the present invention include a gas turbine engine, comprising: a fastener system, including: a first attachment feature; a second attachment feature spaced apart from the first attachment feature; and means for coupling the first attachment feature and the second attachment feature. The means for coupling is tunable to achieve a desired change in a distance between the first attachment feature and the second attachment feature with a change in temperature of the fastener system.

While the disclosure has been described in connection with what is presently considered to be the most practical and preferred embodiment, it is to be understood that the disclosure is not to be limited to the disclosed embodiment(s), but on the contrary, is intended to cover various modifications and equivalent arrangements included within the scope of the appended claims, which scope is to be accorded the broadest interpretation so as to encompass all such modifications and equivalent structures as permitted under the law. Furthermore it should be understood that while the use of the word preferable, preferably, or preferred in the description above indicates that feature so described may be more desirable, it nonetheless may not be necessary and any embodiment lacking the same may be contemplated as within the scope of the disclosure, that scope being defined by the claims that follow. In reading the claims it is intended that when words such as "a," "an," "at least one" and "at least a portion" are used, there is no intention to limit the claim to only one item unless specifically stated to the contrary in the claim. Further, when the language "at least a portion" and/or "a portion" is used the item may include a portion and/or the entire item unless specifically stated to the contrary.

## Claims

1. A gas turbine system for positioning a first structure relative to a second structure, comprising:
a core shaft (24) having a first coefficient of thermal expansion, a first abutment feature, and a first interface feature (34), wherein the first abutment feature is configured for transmitting loads and/or motion between the core shaft (24) and the first structure;
an inner shell (26) having a second coefficient of thermal expansion that is different than the first coefficient of thermal expansion; and having a second interface feature (42) and a third interface feature (44), wherein the first interface feature (34) and the second interface feature (42) are configured for engagement with each other, and are configured to transmit an axial load between the core shaft (24) and the inner shell (26); and **characterised in that** the gas turbine system also comprises
an outer shell (28) having a third coefficient of thermal expansion that is different than the second coefficient of thermal expansion; and having a second abutment feature and a fourth interface feature (54), wherein the second abutment feature is configured for transmitting loads and/or motion between the outer shell (28) to the second structure; and wherein the fourth interface feature (54) and the third interface feature (44) are configured for engagement with each other, and are configured to transmit an axial load between the inner shell (26) and the outer shell (28).

2. The system of claim 1, wherein the first, second, and third coefficients of thermal expansion are selected to:
increase an axial distance between the first abutment feature and the second abutment feature with increasing temperature.

3. The system of claim 1, wherein the first, second, and third coefficients of thermal expansion are selected to:
maintain an axial distance between the first abutment feature and the second abutment feature with increasing temperature.

4. The system of claim 1, wherein the first, second, and third coefficients of thermal expansion are selected to:
decrease an axial distance between the first abutment feature and the second abutment feature with increasing temperature.

5. The system of claim 1, wherein the first, second, and third coefficients of thermal expansion are selected to:
achieve a desired axial distance between the first abutment feature and the second abutment feature at a desired operating temperature.

6. The system of claim 1, wherein the core shaft (24) and the outer shell (26) are configured for sliding relative motion as with respect to each other along a longitudinal axis of the system.

7. The system of claim 1, wherein:
(i) the core shaft (24) is not hollow; or
(ii) the inner shell (26) is disposed within the outer shell (28); and wherein the core shaft (24) is disposed within the inner shell (26).

8. The system of claim 1, wherein in an installed condition, the first abutment feature and the first structure are coupled together, and the second abutment feature and the second structure are coupled together; and wherein in the installed condition, the outer shell (28) and the core shaft (24) are loaded in tension, and the inner shell (24) is loaded in compression.

9. The system of claim 1, wherein in an installed condition, the first abutment feature and the first structure are attached together, and the second abutment feature and the second structure are attached together; wherein in the installed condition and at an operating temperature, the core shaft (24) and the outer shell (28) are loaded in tension; and wherein in the installed condition at the operating temperature, the inner shell (26) is loaded in compression.

## Patentansprüche

1. Gasturbinensystem zum Positionieren einer ersten Struktur im Verhältnis zu einer zweiten Struktur, das Folgendes umfasst:
eine Kernwelle (24), die einen ersten Wärmeausdehnungskoeffizienten, ein erstes Widerlagermerkmal und ein erstes Grenzflächenmerkmal (34) aufweist, wobei das erste Widerlagermerkmal konfiguriert ist zum Übertragen von Lasten und/oder Bewegung zwischen der Kernwelle (24) und der ersten Struktur,
einen inneren Mantel (26), der einen zweiten Wärmeausdehnungskoeffizienten aufweist, der sich von dem ersten Wärmeausdehnungskoeffizienten unterscheidet, und ein zweites Grenzflächenmerkmal (42) und ein drittes Grenzflächenmerkmal (44) aufweist, wobei das erste Grenzflächenmerkmal (34) und das zweite Grenzflächenmerkmal (42) für einen Eingriff miteinander konfiguriert sind und dafür konfiguriert sind, eine axiale Last zwischen der Kernwelle (24) und dem inneren Mantel (26) zu übertragen, und **dadurch gekennzeichnet, dass** das Gasturbinensystem ebenfalls Folgendes umfasst:
einen äußeren Mantel (28), der einen dritten Wärmeausdehnungskoeffizienten aufweist, der sich von dem zweiten Wärmeausdehnungskoeffizienten unterscheidet, und ein zweites Widerlagermerkmal und ein viertes Grenzflächenmerkmal (54) aufweist, wobei das zweite Widerlagermerkmal konfiguriert ist zum Übertragen von Lasten und/oder Bewegung zwischen dem äußeren Mantel (28) und der zweiten Struktur und wobei das vierte Grenzflächenmerkmal (54) und das dritte Grenzflächenmerkmal (44) für einen Eingriff miteinander konfiguriert sind und dafür konfiguriert sind, eine axiale Last zwischen dem inneren Mantel (26) und dem äußeren Mantel (28) zu übertragen.

2. System nach Anspruch 1, wobei der erste, der zweite und der dritte Wärmeausdehnungskoeffizient zu Folgendem ausgewählt sind:
mit zunehmender Temperatur eine axiale Entfernung zwischen dem ersten Widerlagermerkmal und dem zweiten Widerlagermerkmal zu steigern.

3. System nach Anspruch 1, wobei der erste, der zweite und der dritte Wärmeausdehnungskoeffizient zu Folgendem ausgewählt sind:
mit zunehmender Temperatur eine axiale Entfernung zwischen dem ersten Widerlagermerkmal und dem zweiten Widerlagermerkmal aufrechtzuerhalten.

4. System nach Anspruch 1, wobei der erste, der zweite und der dritte Wärmeausdehnungskoeffizient zu Folgendem ausgewählt sind:
mit zunehmender Temperatur eine axiale Entfernung zwischen dem ersten Widerlagermerkmal und dem zweiten Widerlagermerkmal zu vermindern.

5. System nach Anspruch 1, wobei der erste, der zweite und der dritte Wärmeausdehnungskoeffizient zu Folgendem ausgewählt sind:
bei einer gewünschten Betriebstemperatur eine gewünschte axiale Entfernung zwischen dem ersten Widerlagermerkmal und dem zweiten Widerlagermerkmal zu erreichen.

6. System nach Anspruch 1, wobei die Kernwelle (24) und der äußere Mantel (26) konfiguriert sind für eine gleitende relative Bewegung in Bezug aufeinander entlang einer Längsachse des Systems.

7. System nach Anspruch 1, wobei:
(i) die Kernwelle (24) nicht hohl ist oder
(ii) der innere Mantel (26) innerhalb des äußeren Mantels (28) angeordnet ist und wobei die Kernwelle (24) innerhalb des inneren Mantels (26) angeordnet ist.

8. System nach Anspruch 1, wobei in einem installierten Zustand das erste Widerlagermerkmal und die erste Struktur miteinander gekoppelt sind und das zweite Widerlagermerkmal und die zweite Struktur miteinander gekoppelt sind und wobei im installierten Zustand der äußere Mantel (28) und die Kernwelle (24) auf Zug belastet sind und der innere Mantel (26) auf Druck belastet ist.

9. System nach Anspruch 1, wobei in einem installierten Zustand das erste Widerlagermerkmal und die erste Struktur aneinander befestigt sind und das zweite Widerlagermerkmal und die zweite Struktur aneinander befestigt sind, wobei im installierten Zustand und bei einer Betriebstemperatur die Kernwelle (24) und der äußere Mantel (28) auf Zug belastet sind und wobei im installierten Zustand bei der Betriebstemperatur der innere Mantel (26) auf Druck belastet ist.

## Revendications

1. Système de turbine à gaz pour positionner une première structure par rapport à une deuxième structure, comprenant :
un arbre central (24) comportant un premier coefficient de dilatation thermique, une première structure de butée et une première structure d'interface (34), dans lequel la première structure de butée est configurée pour transmettre des charges et/ou un mouvement entre l'arbre central (24) et la première structure ;
une coque interne (26) présentant un deuxième coefficient de dilatation thermique, différent du premier coefficient de dilatation thermique ; et comportant une deuxième structure d'interface (42) et une troisième structure d'interface (44), dans lequel la première structure d'interface (34) et la deuxième structure d'interface (42) sont configurées pour s'engager l'une dans l'autre, et sont configurées pour transmettre une charge axiale entre l'arbre central (24) et la coque interne (26) ; et **caractérisé en ce que** le système de turbine à gaz comprend en outre :
une coque externe (28) présentant un troisième coefficient de dilatation thermique différent du deuxième coefficient de dilatation thermique ; et comportant une deuxième structure de butée et une quatrième structure d'interface (54), dans lequel la deuxième structure de butée est configurée pour transmettre des charges et/ou un mouvement entre la coque externe (28) et la deuxième structure ; et dans lequel la quatrième structure d'interface (54) et la troisième structure d'interface (44) sont configurées pour s'engager l'une dans l'autre, et sont configurées pour transmettre une charge axiale entre la coque interne (26) et la coque externe (28).

2. Système selon la revendication 1, dans lequel les premier, deuxième et troisième coefficients de dilatation thermique sont sélectionnés de sorte à :
accroître une distance axiale entre la première structure de butée et la deuxième structure de butée en présence d'un accroissement de la température.

3. Système selon la revendication 1, dans lequel les premier, deuxième et troisième coefficients de dilatation thermique sont sélectionnés de sorte à :
maintenir une distance axiale entre la première structure de butée et la deuxième structure de butée en présence d'un accroissement de la température.

4. Système selon la revendication 1, dans lequel les premier, deuxième et troisième coefficients de dilatation thermique sont sélectionnés de sorte à :
réduire une distance axiale entre la première structure de butée et la deuxième structure de butée en présence d'un accroissement de la température.

5. Système selon la revendication 1, dans lequel les premier, deuxième et troisième coefficients de dilatation thermique sont sélectionnés de sorte à :
établir une distance axiale voulue entre la première structure de butée et la deuxième structure de butée en présence d'une température opérationnelle voulue.

6. Système selon la revendication 1, dans lequel l'arbre central (24) et la coque externe (26) sont configurés pour effectuer un mouvement coulissant relatif l'un par rapport à l'autre le long d'un axe longitudinal du système.

7. Système selon la revendication 1, dans lequel :
l'arbre central (24) n'est pas creux ; ou
la coque interne (26) est disposée dans la coque externe (28) ; et dans lequel l'arbre central (24) est disposé dans la coque interne (26).

8. Système selon la revendication 1, dans lequel, dans un état d'installation, la première structure de butée et la première structure sont accouplées l'une à l'autre, la deuxième structure de butée et la deuxième structure étant accouplées l'une à l'autre ; et dans lequel, dans l'état installé, la coque externe (28) et l'arbre central (24) sont chargés en tension, la coque interne (24) étant chargée en compression.

9. Système selon la revendication 1, dans lequel, dans un état installé, la première structure de butée et la première structure sont fixées l'une à l'autre, la deuxième structure de butée et la deuxième structure étant fixées l'une à l'autre ; dans lequel, dans l'état installé et en présence d'une température opérationnelle, l'arbre central (24) et la coque externe (28) sont chargés en tension ; et dans lequel, dans l'état installé, et en présence de la température opérationnelle, la coque interne (26) est chargée en compression.
